# EUROPÄISCHE PATENTSCHRIFT

(11) **EP 2 139 735 B1**
(45) Veröffentlichungstag und Bekanntmachung des Hinweises auf die Patenterteilung: **16.06.2010**
(21) Anmeldenummer: 08716592.4
(22) Anmeldetag: 18.03.2008
(51) Int. Cl.: B60T 17/02

(54) **DRUCKLUFTVERSORGUNGSEINRICHTUNG FÜR EIN NUTZFAHRZEUG UND VERFAHREN ZUM BETREIBEN EINER DRUCKLUFTVERSORGUNGSEINRICHTUNG**
COMPRESSED AIR SUPPLY SYSTEM FOR A UTILITY VEHICLE AND METHOD FOR OPERATING SAID COMPRESSED AIR SUPPLY SYSTEM
DISPOSITIF D'ALIMENTATION EN AIR COMPRIMÉ CONÇU POUR UN VÉHICULE UTILITAIRE ET PROCÉDÉ POUR FAIRE FONCTIONNER CE DISPOSITIF D'ALIMENTATION EN AIR COMPRIMÉ

(30) Priorität: 19.03.2007 DE 102007013672
(43) Veröffentlichungstag der Anmeldung: 06.01.2010
(73) Patentinhaber: KNORR-BREMSE Systeme für Nutzfahrzeuge GmbH, 80809 München (DE)
(72) Erfinder: SCHNITTGER, Karsten, 80935 München (DE); KAUPERT, Oliver, 80955 München (DE)
(74) Vertreter: Mattusch, Gundula
(86) Internationale Anmeldenummer: PCT/EP2008/002130
(87) Internationale Veröffentlichungsnummer: WO 2008/113550

(56) Entgegenhaltungen:
- EP-B- 1 318 936
- WO-A-96/34785
- DE-B3-102005 057 004

## Beschreibung

Die Erfindung betrifft eine Druckluftversorgungseinrichtung für ein Nutzfahrzeug mit einem mit einem Kompressor koppelbaren Drucklufteingang, einer mit dem Drucklufteingang über eine Förderleitung gekoppelten Filtereinheit, einer mit einem Ablassausgang und der Förderleitung gekoppelten Ablassventileinrichtung, einer ersten Ventileinrichtung und einer zweiten Ventileinrichtung, wobei durch die erste Ventileinrichtung ein Steuereingang der Ablassventileinrichtung steuerbar ist und die zweite Ventileinrichtung in einem Regenerationsluftpfad für die Regeneration der Filtereinheit angeordnet ist, und mindestens einem pneumatisch sperrbaren Überströmventil, über das ein mit der Druckluftversorgungseinrichtung gekoppelter Verbraucherkreis mit Druckluft versorgbar ist.

Weiterhin betrifft die Erfindung ein Verfahren zum Betreiben einer Druckluftversorgungseinrichtung mit einem mit einem Kompressor koppelbaren Drucklufteingang, einer mit dem Drucklufteingang über eine Förderleitung gekoppelten Filtereinheit, einer mit einem Ablassausgang und der Förderleitung gekoppelten Ablassventileinrichtung, einer ersten Ventileinrichtung und einer zweiten Ventileinrichtung, die in einem Regenerationsluftpfad für die Regeneration der Filtereinheit angeordnet ist, wobei im Rahmen des Verfahrens vorgesehen ist, dass über das mindestens eine pneumatisch sperrbare Überströmventil ein mit der Drudcluftversorgungseinrichtung gekoppelter Verbraucherkreis mit Druckluft versorgt wird und durch die erste Ventileinrichtung ein Steuereingang der Ablassventileinrichtung gesteuert wird.
Derartige Druckluftversorgungseinrichtungen erfüllen in Nutzfahrzeugen zahlreiche Aufgaben. Hierzu gehören insbesondere die Versorgung der Bremsanlage und weiterer Druckluftverbraucher mit trockener gereinigter Druckluft, die Wahrnehmung einer Mehrkreisschutzventilfunktion zur Absicherung verschiedener Verbraucherkreise gegeneinander und zur Sicherstellung einer bestimmten Füllreihenfolge sowie die Bereitstellung einer Druckreglerfunktion. Die von den Druckluftverbrauchem genutzte Druckluft wird primär durch einen Kompressor zur Verfügung gestellt, der im Allgemeinen durch den Verbrennungsmotor des Nutzfahrzeugs angetrieben wird. Bei zahlreichen Systemen lässt sich der Kompressor in einen energiesparenden Zustand überführen, entweder durch Trennen einer Kupplung, über die der Kompressor mit dem Verbrennungsmotor gekoppelt sein kann, oder durch pneumatische Ansteuerung eines Kompressorsteuereingangs, um den Kompressor in einen Leerlaufzustand zu überführen.

Neben dem Förderbetriebszustand der Druckluftversorgungseinrichtung ist als wichtiger weiterer Betriebszustand der Regenerationsbetriebszustand für die Filtereinheit zu realisieren. Zu diesem Zweck wird trockene Druckluft aus den an die Druckluftversorgungseinrichtungen angeschlossenen Druckluftbehältern in einer Richtung durch die Filtereinheit geleitet, die der Förderrichtung entgegengesetzt ist. Die durch die Filtereinheit strömende Luft nimmt die Feuchtigkeit in der Filtereinheit zumindest zum Teil auf, um dann über das Ablassventil der Druckluftversorgungseinrichtung ins Freie zu strömen.

Die WO 96/34785 A1 offenbart eine Druckluftversorgungseinrichtung, deren Verbraucherkreise durch pneumatisch sperrbare Überströmventile versorgt werden. Auf diese Weise ist es möglich, unabhängig vom Schließ- beziehungsweise Öffnungsdruck der Überströmventile gezielt in die Versorgung beziehungsweise Absicherung der Verbraucherkreise sowie die Regeneration einzugreifen, nämlich durch die gezielte Sperrung eines oder mehrerer Überströmventile. Die Regeneration der Druckluftversorgungseinrichtung gemäß der WO 96/34785 A1 erfolgt durch das Öffnen eines Ablassventils und die selektive Entnahme von Druckluft aus einem oder mehreren der Verbraucherkreise. Um diese selektive Entnahme zu ermöglichen, ist es erforderlich, jedem der Überströmventile ein Magnetventil zuzuordnen, das eigens für die Aufgabe der eventuellen Sperrung des Überströmventils vorgesehen ist, wodurch insgesamt ein vergleichsweise hoher apparativer Aufwand getrieben wird.

Der Erfindung liegt die Aufgabe zugrunde, eine Druckluftversorgungseinrichtung und ein Betriebsverfahren zur Verfügung zu stellen, die eine Beeinflussung der Füllreihenfolge mit möglichst wenig apparativem Aufwand gestatten.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass das mindestens eine pneumatisch sperrbare Überströmventil durch die zweite Ventileinrichtung ansteuerbar ist. Die zweite Ventileinrichtung hat somit eine Doppelfunktion. Einerseits dient sie der Sperrung beziehungsweise Freigabe des Regenerationsluftpfades, indem die zweite Ventileinrichtung selbst Bestandteil des Regenerationsluftpfades ist. Andererseits dient die zweite Ventileinrichtung dem selektiven Sperren von Überströmventilen, so dass in vorteilhafter Weise mehrere weitgehend unabhängige Funktionen in ein Bauteil der Druckluftversorgungseinrichtung integriert sind.

Dabei ist nützlicher Weise vorgesehen, dass das mindestens eine pneumatische sperrbare Überströmventil einem Verbraucherkreis zugeordnet ist, der bei fehlender pneumatischer Sperrung des Überströmventils mit höherer Priorität befüllbar ist, als mindestens ein weiterer paralleler Verbraucherkreis, so dass bei Sperrung des Überströmventils der mindestens eine weitere Verbraucherkreis vor dem mit dem mindestens einen pneumatisch sperrbaren Überströmventil gekoppelten Verbraucherkreis befüllbar ist. Die Sperrung der Überströmventile dient also dazu, bestimmte Verbraucherkreise, die an sich mit hoher Priorität befüllt werden, beispielsweise die Betriebsbremskreise, zunächst nicht zu befüllen, sondern stattdessen einen solchen Kreis zu befüllen, der im Normalfall mit niedriger Priorität befüllt wird.

In diesem Zusammenhang kann nützlicher Weise vorgesehen sein, dass der weitere Verbraucherkreis der Luftfederung des Nutzfahrzeugs zugeordnet ist.

Es ist weiterhin von besonderem Vorteil, dass eine elektronische Steuereinheit vorgesehen ist. Diese kann insbesondere in die Druckluftversorgungseinrichtung integriert sein.

Dann ist es von Vorteil, dass die Ventileinrichtungen Magnetventile sind.

Es ist weiterhin bevorzugt, dass dem weiteren Verbraucherkreis ein in die Druckluftversorgungseinrichtung integrierter Drucksensor zugeordnet ist, der mit der elektronischen Steuereinheit in Verbindung steht.

Ebenfalls ist es aber auch denkbar, dass die elektronische Steuereinheit eine Schnittstelle aufweist, über die für den Druck in dem weiteren Verbraucherkreis charakteristische Signale übertragbar sind.

Die Erfindung baut auf dem gattungsgemäßen Verfahren dadurch auf, dass das mindestens eine pneumatisch sperrbare Überströmventil durch die zweite Ventileinrichtung angesteuert wird. Auf diese Weise werden die Vorteile und Besonderheiten der erfindungsgemäßen Druckluftversorgungseinrichtung auch im Rahmen eines Verfahrens umgesetzt. Dies gilt auch für die nachfolgend angegebenen besonders bevorzugten Ausführungsformen des erfindungsgemäßen Verfahrens.

Dieses ist in nützlicher Weise dadurch weitergebildet, dass das mindestens eine pneumatische sperrbare Überströmventil einem Verbraucherkreis zugeordnet ist, der bei fehlender pneumatischer Sperrung des Überströmventils mit höherer Priorität befüllt wird als mindestens ein weiterer paralleler Verbraucherkreis, so dass bei Sperrung des Überströmventils der mindestens eine weitere Verbraucherkreis vor dem mit dem mindestens einen pneumatisch sperrbaren Überströmventil gekoppelten Verbraucherkreis befüllt wird.

Weiterhin kann vorgesehen sein, dass der weitere Verbraucherkreis der Luftfederung des Nutzfahrzeugs zugeordnet ist.

Das Verfahren ist weiterhin dadurch vorteilhaft, dass es durch eine elektronische Steuereinheit gesteuert wird.

Weiterhin ist es nützlich, dass der Druck in dem weiteren Verbraucherkreis innerhalb der Druckluftversorgungseinrichtung ermittelt und in Form eines entsprechenden Signals direkt an die elektronische Steuereinheit übermittelt wird.

Alternativ oder zusätzlich kann vorgesehen sein, dass der Druck in dem weiteren Verbraucherkreis ermittelt und in Form eines entsprechenden Signals über eine mit einem Datenbus gekoppelte Schnittstelle an die elektronische Steuereinheit übermittelt wird.

Die Erfindung wird nun mit Bezug auf die begleitenden Zeichnungen anhand besonders bevorzugter Ausführungsformen beispielhaft erläutert.

Es zeigen:
- Figur 1: eine schematische Teildarstellung einer ersten Ausführungsform einer erfindungsgemäßen Druckluftversorgungseinrichtung und
- Figur 2: eine schematische Teildarstellung einer zweiten Ausführungsform einer erfindungsgemäßen Druckluftversorgungseinrichtung.

Die Druckluftversorgungseinrichtung 10 enthält eine elektronische Steuereinheit 12. Die Steuereinheit 12 ist über eine elektrische Schnittstelle 48 zum Zwecke der Energieversorgung und zum Signalaustausch mit anderen Fahrzeugkomponenten ausgestattet. Von der elektronischen Steuereinheit 12 sind zwei 3/2-Wege-Magnetventile 16, 18 ansteuerbar. Weitere Komponenten, beispielsweise eine Heizung, eine Vielzahl von Drucksensoren und weitere Magnetventile, die im Zusammenhang mit der elektronischen Steuereinheit 12 vorgesehen sein können, sind nicht dargestellt. Die Druckluftversorgungseinrichtung hat einen mit einem Kompressor koppelbaren Drucklufteingang 26 und einen Ablassausgang 24. Zwischen dem Drucklufteingang 26 und dem Ablassausgang 24 ist ein Ablassventil 20 angeordnet. Mit dem Drucklufteingang 26 steht weiterhin eine Filtereinheit 14 in Verbindung. Über diese Filtereinheit 14 wird die dem Drucklufteingang 26 zugeführte Druckluft den Verbraucherkreisen zugeleitet, wobei auf diesem Pfad ein Rückschlagventil 52 vorgesehen ist, das ein Rückströmen von Druckluft aus den Verbraucherkreisen verhindert. Die Versorgung der Verbraucherkreise aus der mit dem Rückschlagventil 52 gekoppelten Vorsorgungsleitung 50 erfolgt über eine in die Druckluftversorgungseinrichtung eingebundene Mehrkreisschutzventileinrichtung, die hier durch drei Überströmventite 42, 44, 46 beispielhaft dargestellt ist. Die Überströmventite 44, 46 versorgen beispielsweise direkt die Betriebsbremskreise 30, 32 des Nutzfahrzeugs. Das Überströmventil 42 versorgt beispielsweise den Luftfederkreis 34 des Nutzfahrzeugs. Der Druck im Luftfederkreis 34 wird durch einen Drucksensor 36 erfasst, der mit der elektronischen Steuereinheit 12 elektrisch verbunden ist. Auch die Drücke der anderen Verbraucherkreise können durch Drucksensoren überwacht werden, wobei diese vorliegend nicht dargestellt sind. Die Betriebsbremskreise 30, 32 stehen über ein Wechselventil 38 miteinander in Verbindung. An diesem Wechselventil 38 setzt eine Versorgungsleitung 40 an, über die insbesondere weitere Verbraucherkreise versorgt werden können, indem die Versorgungsleitung 40 mit Überströmventilen in Verbindung steht, die diesen Verbraucherkreisen zugeordnet sind. Es liegt also eine serielle Versorgung nachgeordneter Verbraucherkreise über die Versorgungsleitung 40 vor, während der Luftfederkreis 34 parallel zu den Betriebsbremskreisen 30, 32 mit Druckluft versorgt wird. Ebenfalls ist es möglich, anstelle der seriellen Versorgung von Verbraucherkreisen über die Versorgungsleitung 40 auch die verbleibenden Verbraucherkreise parallel zu versorgen, das heißt direkt ohne den Umweg über die Überströmventile 44, 46 aus der Versorgungsleitung 50. Die Überströmventile 44, 46 weisen jeweils einen Steuereingang 62, 64 auf, deren Druckbeaufschlagung in dieselbe Richtung wirkt, wie die Schließkraft der Überströmventile 44, 46. Eine Steuerleitung 66, die diese Steuereingänge 62, 64 ansteuert, steht mit einem Magnetventil 18 in Verbindung. Dieses ist als 3/2-Wegeventil ausgelegt, wobei die verbleibenden Anschlüsse des Magnetventils 18 mit der Versorgungsleitung 40 beziehungsweise dem Ablassausgang 24 der Druckluftversorgungseinrichtung 10 verbunden sind. Der mit der Steuerleitung 66 verbundene Anschluss des Magnetventils 18 steht weiterhin über ein Rückschlagventil 56 und eine Drossel 58 mit einem Leitungsabschnitt 54 zwischen der Filtereinheit 14 und dem Rückschlagventil 52 in Verbindung. Insofern ist das Magnetventil 18 Bestandteil eines Regenerationsluftpfades, der die Versorgungsleitung 40 über das Magnetventil 18, das Rückschlagventil 56, die Drossel 58, die Filtereinheit 14 und das Ablassventil 20 mit dem Ablassausgang 24 verbindet. Ein weiteres Magnetventil 16 steht ebenfalls mit der Versorgungsleitung 40 und dem Ablassausgang 24 in Verbindung. Der verbleibende Anschluss des 3/2-Wege-Magnetventils 16 dient der Ansteuerung eines Steuereingangs 22 des Ablassventils 20 und eines Energiesparsteuerausgangs 28, mit dem ein Steuereingang eines Kompressors verbunden werden kann. Durch Belüften des Energiesparsteuerausgangs 28 wird der Kompressor in einen energiesparenden Zustand, nämlich einen so genannten Leerlaufzustand, überführt. Ebenfalls ist es denkbar, über den Energiesparsteuerausgang 28 eine steuerbare Kupplung anzusteuern, mit dem der Kompressor je nach Steuerzustand der Kupplung mit dem Verbrennungsmotor des Nutzfahrzeugs gekoppelt oder von diesem getrennt ist. Auch ist es möglich, auf den Energiesparsteuerausgang 28 vollständig zu verzichten und das Energiemanagement des Kompressors durch ein elektrisches Steuersignal zu bewirken. Es ist eine weitere Steuerleitung 60 vorgesehen, so dass das Ablassventil 20 auch als Überdruckventil arbeiten kann. Ebenfalls ist es denkbar, ein separates Überdruckventil für diesen Zweck vorzusehen.

Im Hinblick auf die Regeneration der Filtereinheit 14 arbeitet die Druckluftversorgungseinrichtung 10 wie folgt. In einem ersten Betriebszustand sind beide Magnetventile 16, 18 stromlos. Folglich ist der Regenerationsluftpfad gesperrt, der Energiesparsteuerausgang 28 ist entlüftet, so dass der hier angeschlossene Kompressor fördert, und das Ablassventil 20 ist aufgrund entlüftetem Steuereingang 22 geschlossen. Werden beide Magnetventile 16, 18 bestromt, so ist der Regenerationsluftpfad offen, der Energiesparsteuerausgang 28 ist belüftet, so dass sich der Kompressor im Leerlauf befindet, und das Ablassventil 20 ist geöffnet.

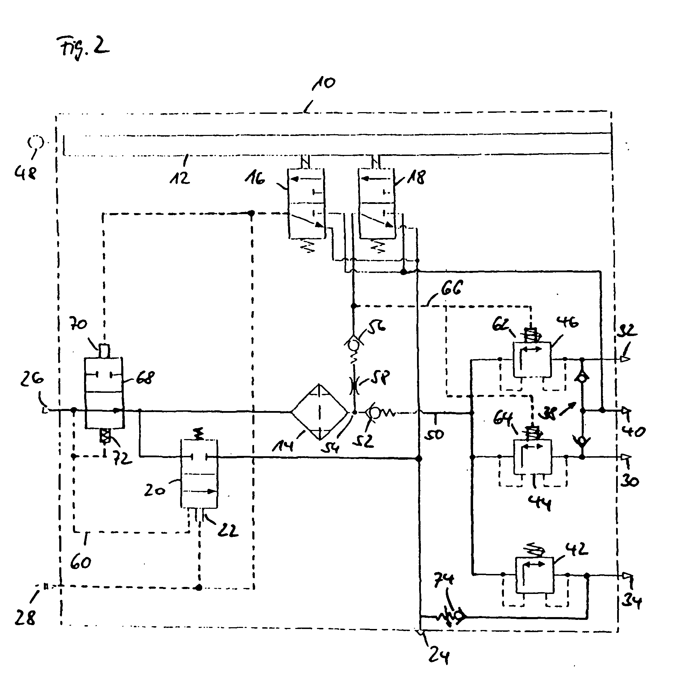

Im Hinblick auf die Befüllung der Verbraucherkreise 30, 32, 34 beziehungsweise die Belüftung der Versorgungsleitung 40 erfüllt das Magnetventil 18 eine weitere Aufgabe. Ist dieses stromlos, so erfolgt die Befüllung gemäß der herkömmlichen Fütlreihenfolge, die durch die Öffnungsdrücke der Überströmventile 42, 44, 46 festgelegt ist. Im Normalfall werden daher die Betriebsbremskreise 30, 32 vorrangig befüllt. Wird jedoch das Magnetventil 18 bestromt und werden damit die Steuereingänge 62, 64 der Überströmventile 44, 46 belüftet, so sperrt dies die Überströmventile 44, 46. Folglich wird zunächst der Luftfederkreis 34 über das parallel geschaltete Überströmventil 42 befüllt. Der Drucksensor 36 stellt dabei die Druckregelung der Druckluftversorgungseinrichtung 10 sicher. Ist kein Drucksensor für diese Zwecke in die Druckluftversorgungseinrichtung 10 integriert, so kann der Druck des Druckluftversorgungseinrichtung 10 integriert, so kann der Druck des Luftfederkreises auch anderweitig ermittelt werden, und ein entsprechendes Signal an die elektronische Steuereinheit 12 der Druckluftversorgungseinrichtung übermittelt werden, insbesondere über die elektrische Schnittstelle 48. Weiterhin kann vorgesehen sein, anstelle des Drucksensors 36 oder zusätzlich zu dem Drucksensor 36 ein Überdruckventil vorzusehen (siehe auch Figur 2).

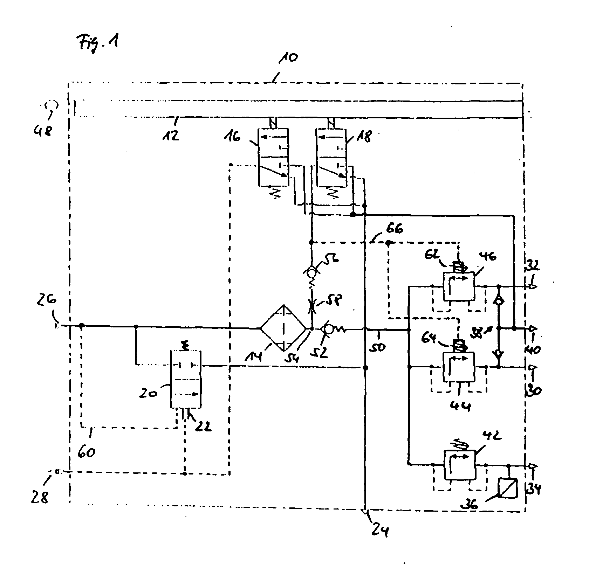

Figur 2 zeigt eine schematische Teildarstellung einer zweiten Ausführungsform einer erfindungsgemäßen Druckluftversorgungseinrichtung. Wie bereits im Zusammenhang mit Figur 1 erwähnt wurde, kann an den Luftfederkreis 34 ein Überdruckventil 74, wie hier dargestellt, angeschlossen sein. Andererseits kann auch die Ausführungsform gemäß Figur 2 mit einem Drucksensor im Luftfederkreis 34 ausgestattet sein. Ansonsten entspricht die Ausführungsform der Figur 2 weitgehend derjenigen gemäß Figur 1, wobei allerdings hier zusätzlich ein Förderleitungsabsperrventit 68 vorgesehen ist. Dieses hat einen ersten Steuereingang 72, der mit dem Magnetventil 16 gekoppelt ist. Ein zweiter Steuereingang 72 steht direkt mit dem Drucklufteingang 26 in Verbindung. Wird somit die Regeneration der Filtereinheit 14 durch Umschalten beider Magnetventile 16, 18 eingeleitet, so kann hierdurch aufgrund einer Belüftung des ersten Steuereingangs 70 das Förderleitungsabsperrventil 68 in seinen geschlossenen Zustand überführt werden. Folglich geht das Druckluftvolumen zwischen Kompressor und Förderleitungsabsperrventil 68 während der Regeneration nicht verloren. Wird der Kompressor wieder in Betrieb genommen, so stellt das Entlüften des Steuereingangs 70 und das Belüften des Steuereingangs 72 ein Umschalten des Förderleitungsabspenventils 68 sicher.

Im Zusammenhang mit den Figuren 1 und 2 wurde beschrieben, dass die Druckluftversorgung der Magnetventile 16, 18 von einer Stelle erfolgt, die den Überströmventilen 44, 46 nachgeordnet ist. Es ist aber auch möglich, die Druckluftversorgung aus der Versorgungsleitung 50 vorzunehmen, das heißt von einer Stelle stromabwärts des Rückschlagventils 52, aber stromaufwärts der Mehrkreisschutzventileinrichtung.

Weiterhin ist die vorliegende Erfindung nicht auf die beschriebene Verschaltung der Magnetventile 16, 18 beschränkt. Die Steueraufgaben der Druckluftversorgungseinrichtung können auch in anderer Weise auf diese Magnetventile 16, 18 aufgeteilt oder sogar durch andere Steuerelemente wahrgenommen werden.

### Bezugszeichenliste:

- 10: Druckluftversorgungseinrichtung
- 12: elektronische Steuereinheit
- 14: Filtereinheit
- 16: Ventileinrichtung
- 18: Ventileinrichtung
- 20: Ablassventil
- 22: Steuereingang
- 24: Ablassausgang
- 26: Drucklufteingang
- 28: Energiesparsteuerausgang
- 30: Betriebsbremskreis
- 32: Betriebsbremskreis
- 34: Luftfederkreis
- 36: Drucksensor
- 38: Wechselventil
- 40: Versorgungsleitung
- 42: Überströmventil
- 44: Überströmventil
- 46: Überströmventil
- 48: Schnittstelle
- 50: Versorgungsleitung
- 52: Rückschlagventil
- 54: Leitungsabschnitt
- 56: Rückschlagventil
- 58: Drossel
- 60: Steuerleitung
- 62: Steuereingang
- 64: Steuereingang
- 66: Steuerleitung
- 68: Förderleitungsabspenventil
- 70: Steuereingang
- 72: Steuereingang
- 74: Überdruckventil

## Patentansprüche

1. Druckluftversorgungseinrichtung (10) für ein Nutzfahrzeug mit
- einem mit einem Kompressor koppelbaren Drucklufteingang (26),
- einer mit dem Drucklufteingang (26) über eine Förderleitung gekoppelten Filtereinheit (14),
- einer mit einem Ablassausgang (24) und der Förderleitung gekoppelten Ablassventileinrichtung (20),
- einer ersten Ventileinrichtung (16) und einer zweiten Ventileinrichtung (18), wobei durch die erste Ventileinrichtung (16) ein Steuereingang (22) der Ablassventileinrichtung (20) steuerbar ist und die zweite Ventileinrichtung (18) in einem Regenerationsluftpfad für die Regeneration der Filtereinheit (14) angeordnet ist, und
- mindestens einem pneumatisch sperrbaren Überströmventil, über das ein mit der Druckluftversorgungseinrichtung gekoppelter Verbraucherkreis mit Druckluft versorgbar ist,
**dadurch gekennzeichnet, dass** das mindestens eine pneumatisch sperrbare Überströmventil durch die zweite Ventileinrichtung ansteuerbar ist.

2. Druckluftversorgungseinrichtung (10) nach Anspruch 1, **dadurch gekennzeichnet, dass** das mindestens eine pneumatische sperrbare Überströmventil einem Verbraucherkreis zugeordnet ist, der bei fehlender pneumatischer Sperrung des Überströmventils mit höherer Priorität befüllbar ist als mindestens ein weiterer paralleler Verbraucherkreis, so dass bei Sperrung des Überströmventils der mindestens eine weitere Verbraucherkreis vor dem mit dem mindestens einen pneumatisch sperrbaren Überströmventil gekoppelten Verbraucherkreis befüllbar ist.

3. Druckluftversorgungseinrichtung (10) nach Anspruch 2, **dadurch gekennzeichnet, dass** der weitere Verbraucherkreis der Luftfederung des Nutzfahrzeugs zugeordnet ist.

4. Druckluftversorgungseinrichtung (10) nach einem der vorhergehenden Ansprüche, **dadurch gekennzeichnet, dass** eine elektronische Steuereinheit (12) vorgesehen ist.

5. Druckluftversorgungseinrichtung (10) nach Anspruch 4, **dadurch gekennzeichnet, dass** die Ventileinrichtungen (16, 18) Magnetventile sind.

6. Druckluftversorgungseinrichtung (10) nach Anspruch 4 oder 5, **dadurch gekennzeichnet, dass** dem weiteren Verbraucherkreis ein in die Druckluftversorgungseinrichtung integrierter Drucksensor zugeordnet ist, der mit der elektronischen Steuereinheit in Verbindung steht.

7. Druckluftversorgungseinrichtung (10) nach einem der Ansprüche 3 bis 5, **dadurch gekennzeichnet, dass** die elektronische Steuereinheit eine Schnittstelle aufweist, über die für den Druck in dem weiteren Verbraucherkreis charakteristische Signale übertragbar sind.

8. Verfahren zum Betreiben einer Druckluftversorgungseinrichtung (10) mit einem mit einem Kompressor koppelbaren Drucklufteingang (26), einer mit dem Drucktufteingang (26) über eine Förderleitung gekoppelten Filtereinheit (14), einer mit einem Ablassausgang (24) und der Förderleistung gekoppelten Ablassventileinrichtung (20), einer ersten Ventileinrichtung (16) und einer zweiten Ventileinrichtung (18), die in einem Regenerationsluftpfad für die Regeneration der Filtereinheit (14) angeordnet ist, wobei im Rahmen des Verfahrens vorgesehen ist, dass über das mindestens eine pneumatisch sperrbare Überströmventil ein mit der Druckluftversorgungseinrichtung gekoppelter Verbraucherkreis mit Druckluft versorgt wird und durch die erste Ventileinrichtung (16) ein Steuereingang (22) der Ablassventileinrichtung (20) gesteuert wird, **dadurch gekennzeichnet, dass** das mindestens eine pneumatisch sperrbare Überströmventil durch die zweite Ventileinrichtung angesteuert wird.

9. Verfahren nach Anspruch 8, **dadurch gekennzeichnet, dass** das mindestens eine pneumatische sperrbare Überströmventil einem Verbraucherkreis zugeordnet ist, der bei fehlender pneumatischer Sperrung des Überströmventils mit höherer Priorität befüllt wird als mindestens ein weiterer paralleler Verbraucherkreis, so dass bei Sperrung des Überströmventils der mindestens eine weitere Verbraucherkreis vor dem mit dem mindestens einen pneumatisch sperrbaren Überströmventil gekoppelten Verbraucherkreis befüllt wird.

10. Verfahren nach Anspruch 9, **dadurch gekennzeichnet, dass** der weitere Verbraucherkreis der Luftfederung des Nutzfahrzeugs zugeordnet ist.

11. Verfahren nach einem der Ansprüche 8 bis 10, **dadurch gekennzeichnet, dass** es durch eine elektronische Steuereinheit (12) gesteuert wird.

12. Verfahren nach Anspruch 11, **dadurch gekennzeichnet, dass** der Druck in dem weiteren Verbraucherkreis innerhalb der Druckluftversorgungseinrichtung ermittelt und in Form eines entsprechenden Signals direkt an die elektronische Steuereinheit übermittelt wird.

13. Verfahren nach Anspruch 11 oder 12, **dadurch gekennzeichnet, dass** der Druck in dem weiteren Verbraucherkreis ermittelt und in Form eines entsprechenden Signals über eine mit einem Datenbus gekoppelte Schnittstelle an die elektronische Steuereinheit übermittelt wird.

## Claims

1. A compressed air supply unit (10) for a commercial vehicle having
- a compressed air inlet (26) that can be coupled to a compressor,
- a filter module (14) coupled to the compressed air inlet (26) via a delivery line,
- a discharge valve unit (20) coupled to a discharge outlet (24) and the delivery line,
- a first valve unit (16) and a second valve unit (18), the first valve unit (16) serving to control a control inlet (22) of the discharge valve unit (20) and the second valve unit (18) being arranged in a regeneration air path for the regeneration of the filter module (14), and
- at least one pneumatically closable overflow valve, which serves to supply a consumer circuit coupled to the compressed air supply unit with compressed air.
**characterized in that** at least one pneumatically closable overflow valve is capable of actuation by the compressed air supply unit.

2. The compressed air supply unit (10) as claimed in claim 1, **characterized in that** at least one pneumatically closable overflow valve is assigned to a consumer circuit, which failing pneumatic closure of the overflow valve can be filled with a higher priority than at least one further parallel consumer circuit, so that on closing of the overflow valve at least one further consumer circuit can be filled before the consumer circuit coupled to at least one pneumatically closable overflow valve.

3. The compressed air supply unit (10) as claimed in claim 2, **characterized in that** the further consumer circuit is assigned to the pneumatic suspension of the commercial vehicle.

4. The compressed air supply unit (10) as claimed in one of the preceding claims, **characterized in that** an electronic control module (12) is provided.

5. The compressed air supply unit (10) as claimed in claim 4, **characterized in that** the valve units (16, 18) are solenoid valves.

6. The compressed air supply unit (10) as claimed in claim 4 or 5, **characterized in that** a pressure sensor, which is integrated into the compressed air supply unit and is connected to the electronic control module, is assigned to the further consumer circuit.

7. The compressed air supply unit (10) as claimed in one of claims 3 to 5, **characterized in that** the electronic control module has an interface, via which signals characteristic of the pressure in the further consumer circuit can be transmitted.

8. A method for operating a compressed air supply unit (10) having a compressed air inlet (26) that can be coupled to a compressor, a filter module (14) coupled to the compressed air inlet (26) via a delivery line, a discharge valve unit (20) coupled to a discharge outlet (24) and the delivery line, a first valve unit (16) and a second valve unit (18), which is arranged in a regeneration air path for the regeneration of the filter module (14), in which method at least one pneumatically closable overflow valve serves to supply a consumer circuit coupled to the compressed air supply unit with compressed air and the first valve unit (16) serves to control a control inlet (22) of the discharge valve unit (20), **characterized in that** at least one pneumatically closable overflow valve is actuated by the second valve unit.

9. The method as claimed in claim 8, **characterized in that** at least one pneumatically closable overflow valve is assigned to a consumer circuit, which failing pneumatic closure of the overflow valve can be filled with a higher priority than at least one further parallel consumer circuit, so that on closing of the overflow valve at least one further consumer circuit can be filled before the consumer circuit coupled to at least one pneumatically closable overflow valve.

10. The method as claimed in claim 9, **characterized in that** the further consumer circuit is assigned to the pneumatic suspension of the commercial vehicle.

11. The method as claimed in one of claims 8 to 10, **characterized in that** it is controlled by an electronic control module (12).

12. The method as claimed in claim 11,
**characterized in that** the pressure in the further consumer circuit is determined within the compressed air supply unit and in the form of a corresponding signal is transmitted directly to the electronic control module.

13. The method as claimed in claims 11 or 12, **characterized in that** the pressure in the further consumer circuit is determined and in the form of a corresponding signal is relayed to the electronic control module via an interface coupled to a data bus.

## Revendications

1. Dispositif (10) d'alimentation en air comprimé conçu pour un véhicule utilitaire et comprenant
- une entrée (26) d'air comprimé, pouvant être couplée à un compresseur,
- une unité (14) de filtration, couplée à l'entrée (26) d'air comprimé par un conduit de circulation,
- un dispositif (20) de vanne d'évacuation, couplé à une sortie (24) d'évacuation et au conduit de circulation,
- un premier dispositif (16) de vanne et un deuxième dispositif (18) de vanne, dans lequel par le premier dispositif (16) de vanne une entrée (22) de commande du dispositif (20) de vanne d'évacuation peut être commandée et le deuxième dispositif (18) de vanne est monté dans un trajet d'air de régénération pour la régénération de l'unité (14) de filtration, et
- au moins une vanne de décharge, qui peut être fermée pneumatiquement et par laquelle le circuit de consommateur couplé au dispositif d'alimentation en air comprimé peut être alimenté en air comprimé,
**caractérisé en que** la au moins une vanne de décharge, pouvant être fermée pneumatiquement, peut être commandée par le deuxième dispositif de vanne.

2. Dispositif (10) d'alimentation en air comprimé suivant la revendication 1, **caractérisé en ce que** la au moins une vanne de décharge, pouvant être fermée pneumatiquement, est associée à un circuit de consommateur qui peut, lorsque la fermeture pneumatique de la vanne de décharge est défaillante, être rempli avec une priorité plus grande qu'au moins un autre circuit de consommateur parallèle de sorte que, lors de la fermeture de la vanne de décharge, le au moins un autre circuit de consommateur peut être rempli par le circuit de consommateur couplé à la au moins une vanne de décharge pouvant être fermée pneumatiquement.

3. Dispositif (10) d'alimentation en air comprimé suivant la revendication 2, **caractérisé en ce que** l'autre circuit de consommateur est associé à la suspension pneumatique du véhicule utilitaire.

4. Dispositif (10) d'alimentation en air comprimé suivant l'une des revendications précédentes, **caractérisé en ce qu'**il est prévu une unité (12) électronique de commande.

5. Dispositif (10) d'alimentation en air comprimé suivant la revendication 4, **caractérisé en ce que** les dispositifs (16, 18) de vanne sont des électrovannes.

6. Dispositif (10) d'alimentation en air comprimé suivant la revendication 4 ou 5, **caractérisé en ce qu'**à l'autre circuit de consommateur est associé un capteur de pression intégré dans le dispositif d'alimentation en air comprimé et en liaison avec l'unité électronique de commande.

7. Dispositif (10) d'alimentation en air comprimé suivant l'une des revendications 3 à 5, **caractérisé en ce que** l'unité électronique de commande a une interface, par laquelle les signaux caractéristiques de la pression dans l'autre circuit de consommateur peuvent être transmis.

8. Procédé pour faire fonctionner un dispositif (10) d'alimentation en air comprimé, comprenant une entrée (26) d'air comprimé pouvant être couplée à un compresseur, une unité (14) de filtration, couplée à l'entrée (26) d'air comprimé par un conduit de circulation, un dispositif (20) de vanne d'évacuation, couplé à une sortie (24) d'évacuation et au conduit de circulation, un premier dispositif (16) de vanne et un deuxième dispositif (18) de vanne, qui est monté dans un trajet d'air de régénération pour la régénération de l'unité (14) de filtration, dans lequel il est prévu, dans le cadre du procédé, que par la au moins une vanne de décharge, pouvant être fermée pneumatiquement, un circuit de consommateur couplé au dispositif d'alimentation en air comprimé peut être alimenté en air comprimé et, par le premier dispositif (16) de vanne, une entrée (22) de commande du dispositif (20) de vanne d'évacuation est commandée, **caractérisé en ce que** la au moins une vanne de décharge, pouvant être fermée pneumatiquement, est commandée par le deuxième dispositif de vanne.

9. Procédé suivant la revendication 8, **caractérisé en ce que** la au moins une vanne de décharge, pouvant être fermée pneumatiquement, est associée à un circuit de consommateur, qui, lorsque la fermeture pneumatique de la vanne de décharge est défaillante, est rempli avec une priorité plus grande qu'au moins un autre circuit de consommateur parallèle de sorte que, lors de la fermeture de la vanne de décharge, le au moins un autre circuit de consommateur est rempli avant le circuit de consommateur couplé à la au moins une vanne de décharge, pouvant être fermée pneumatiquement.

10. Procédé suivant la revendication 9, **caractérisé en ce que** l'autre circuit de consommateur est associé à la suspension pneumatique du véhicule utilitaire.

11. Procédé suivant l'une des revendications 8 à 10, **caractérisé en ce que** l'on commande par une unité (12) électronique de commande.

12. Procédé suivant la revendication 11, **caractérisé en ce que** l'on détermine la pression dans l'autre circuit de consommateur à l'intérieur du dispositif d'alimentation en air comprimé et on la transmet, sous la forme d'un signal correspondant, directement à l'unité électronique de commande.

13. Procédé suivant la revendication 11 ou 12, **caractérisé en ce que** l'on détermine la pression dans l'autre circuit de consommateur et on la transmet, sous la forme d'un signal correspondant, à l'unité électronique de commande par une interface couplée à un bus de données.
